## Europäisches Patentamt
## European Patent Office
## Office européen des brevets

Veröffentlichungsnummer: **0 295 389**
**A2**

# EUROPÄISCHE PATENTANMELDUNG

Anmeldenummer: 88106298.8

Anmeldetag: 20.04.88

Int. Cl.⁴ **B01D 1/18 , B01J 2/04 , C04B 35/00**

Priorität: 13.06.87 DE 3719825

Veröffentlichungstag der Anmeldung:
21.12.88 Patentblatt 88/51

Benannte Vertragsstaaten:
**AT BE FR GB**

Anmelder: **Kernforschungszentrum Karlsruhe GmbH**
**Weberstrasse 5 Postfach 3640**
**D-7500 Karlsruhe 1(DE)**

Erfinder: **Vollath, Dieter, Dr.**
**Primelweg 3**
**D-7513 Stutensee-Fr.(DE)**
Erfinder: **Dörzapf, Bernhard**
**Rosenstrasse 15**
**D-6729 Kuhardt(DE)**

Verfahren zur Herstellung von Keramikpulvern und Vorrichtung zur Durchführung desselben.

Die Erfindung betrifft ein Verfahren und eine Vorrichtung zur Herstellung von Keramikpulvern.

Aufgabe der Erfindung ist es, ein Verfahren zur Herstellung von feinen Keramikpulvern mit Teilchengrößen unter 5 μm zu schaffen, bei welchem keine ultrafeinen Pulver entstehen und bei welchem größere Temperaturschwankungen in der ersten Heizzone aufgrund von Schwankungen bei der Zudosierung der Lösung bzw. der Suspension vermieden werden.

Die Aufgabe wird erfindungsgemäß dadurch gelöst, daß das Versprühen der Lösung oder der Suspension und/oder das Verdampfen des Lösungsmittels mit Hilfe eines zuvor auf eine Temperatur im Bereich von 500° C bis 800° C erhitzten Gases erfolgt, die Partikelchen zur Reaktion und zumindest teilweisen Kalzination auf 900° C bis 1000° C erhitzt werden und in einer Abscheidezone auf eine Temperatur zwischen 150° C und 500° C wieder abgekühlt werden.

EP 0 295 389 A2

## Verfahren zur Herstellung von Keramikpulvern und Vorrichtung zur Durchführung desselben

Die Erfindung betrifft ein Verfahren und eine Vorrichtung zur Herstellung von Keramikpulvern, bei welchem

a) eine Lösung oder eine Suspension der Stoffe, aus denen die Bestandteile des Keramikpulvers gebildet werden, hergestellt wird,

b) die Lösung oder die Suspension durch eine Düse in eine beheizbare, in mehrere Heizzonen unterteilte Vorrichtung versprüht wird,

c) wobei mindestens in der ersten Heizzone das Lösungsmittel verdampft wird und Trockenrückstandspartikelchen entstehen und

d) in mindestens einer weiteren Heizzone die Trockenrückstands-Partikelchen auf eine höhere Temperatur als der in Schritt c) angewendeten gebracht und durch Zersetzungs- oder eine andere chemische Reaktion in die Bestandteile des Keramikpulvers überführt werden.

Ein solches Verfahren, bei welchem beispielsweise eine wäßrige Lösung von Barium-, Blei-, Titan- und evtl. anderen Salzen in einer ersten Zone eines Ofens bei einer Temperatur von 150° C bis 180° C zerstäubt wird und die Lösungströpfchen getrocknet werden und danach die Feststoffteilchen in einer zweiten Wärmezone des Ofens bei ca. 400° C bis 500° C Zersetzungsreaktionen unterliegen, wird in der DE-OS 34 09 815 beschrieben. Aufgrund der hohen Verdampfungsenthalpie, die zur Trocknung der Lösungströpfchen aufgebracht werden muß, wird für die erste Beheizungszone von außen eine Temperatur von ca. 500° C vorgesehen, so daß die stark absinkende Temperatur im Zerstäubungsraum des Ofens wenigstens 150° C betragen kann. Ggf. wird das Zerstäuben zeitweise unterbrochen, bis eine Temperatur von etwa 180° C im Innenraum wieder erreicht ist. Die bei dem Verfahren nach der Offenlegungsschrift verwendete Reaktionssprühvorrichtung weist zur Zerstäubung der Lösung einen Ultraschall-Schwinger auf. Man erhält damit Tröpfchen bzw. Hohlkugelpartikel in der Größenordnung von 1 bis 100 μm, insbesondere um 20 μm, Durchmesser. In einer alternativen Ausführungsform des Ultraschall-Schwingers werden Tröpfchen bzw. Hohlkugelpartikel in der Größenordnung von 0,1 bis 5 μm, insbesondere um 1 μm, Durchmesser erhalten. Nachteilig wirkt sich bei dem Verfahren nach der DE-OS die starke Temperaturabsenkung im Innern der ersten Heizzone während des Trocknungsvorganges der Flüssigkeitströpfchen auf. Die Zufuhr der zu versprühenden Flüssigkeit müß so geregelt werden, daß die Temperatur im Innenraum nicht unter eine gewisse, vorbestimmte Grenze abfällt. Der Größenbereich der Hohlkugelpartikel, die mit dem Verfahren erhalten werden, ist jeweils relativ weit und die durchschnittliche Partikelgröße abhängig von der Konstrucktion des Ultraschall-Zerstäubers.

Bei der Herstellung von Keraumikpulvern will man im allgemeinen besonders feine Pulverkörner. Es gibt experimentell realisierte Verfahren über Pulverherstellung in Gasphasen mit Laserheizung oder Trocknen von Tröpfchen in einer ICP-Flamme, die Pulver mit Teilchengrößen im Bereich um 0,01 μm liefern. Diese Pulver neigen jedoch sehr stark zum Agglomerieren. Weitere Nachteile des Verfahrens zur Herstellung solcher "ultrafeinen" Pulver sind der hohe Energiebedarf und die bisher sehr geringe Produktmenge im mg Bereich.

Aufgabe der Erfindung ist es, ein Verfahren zur Herstellung von feinen Keramikpulvern mit Teilchengrößen unter 5 μm zu schaffen, bei welchem keine ultrafeinen Pulver entstehen und bei welchem größere Temperaturschwankungen in der ersten Heizzone aufgrund von Schwankungen bei der Zudosierung der Lösung bzw. der Suspension vermieden werden.

Die Aufgabe wird erfindungsgemäß dadurch gelöst, daß

e) das Versprühen der Lösung oder der Suspension und/oder das Verdampfen des Lösungsmittels mit Hilfe eines zuvor auf eine Temperatur im Bereich von 500° C bis 800° C erhitzten Gases erfolgt,

f) die Partikelchen zur Reaktion und zumindest teilweisen Kalzination auf 900° C bis 1000° C erhitzt werden und

g) in einer Abscheidezone auf eine Temperatur zwischen 150° C und 500° C wieder abgekühlt werden.

Der Teil der Aufgabenstellung, der sich auf die Vorrichtung zur Durchführung des Verfahrens bezieht, wird durch eine Vorrichtung gelöst, bestehend aus einem mit einer unterteilten, äußeren Heizung versehenen, länglichen Behälter mit einem Deckel, in dem eine Sprüheinrichtung zum Versprühen der Lösung oder der Suspension und eine Gaszufuhrleitung angeordnet ist, und einem Boden, in welchem oder in dessen Nähe ein Produkt-Auslaß vorgesehen ist, die dadurch gekennzeichnet ist, daß

a) der Behälter einen oberen Teil, in den die Sprüheinrichtung mündet, und einen unteren Teil aufweist,

b) ein Heizungsteil den oberen Behälterteil und ein weiterer Heizungsteil den unteren Behälterteil umgibt,

c) Deckel mit Sprüheinrichtung, oberer Behälterteil mit Heizungsteil, unterer Behälterteil mit Heizungsteil und der als beheizbare Abscheide-Einrichtung für das Produkt-Pulver ausgebildete Boden des Behälters wieder lösbar miteinander verbunden sind.

Die Sprüheinrichtung kann aus einer Sprühdüse mit einem diese umschließenden gasdurchlässigen Heißgasverteiler und den entsprechenden Zuführungen für die zu versprühende Lösung oder Suspension, für das Sprühgas und für das zusätzliche Heißgas bestehen.

Die Sprüheinrichtung kann auch ohne Sprühgaszuführung ausgebildet sein. In einem solchen Falle muß das Heißgas die Funktion des Sprühgases übernehmen und eine eventuell verwendbare Düse entsprechend ausgebildet sein.

Manche Suspensionen neigen zum Absetzen oder Agglomerieren. Dies kann durch den Zusatz von Kolloidstabilisatoren vermieden werden.

Durch die Anwendung des Heißgases während des Versprühens der Lösung oder der Suspension wird eine sehr rasche Trocknung der Flüssigkeitströpfchen und u.U. eine zumindest teilweise Reaktion, beispielsweise Zersetzungsreaktion der getrockneten Partikel, erreicht. In der nachfolgenden Heizzone höherer Temperatur werden dann die Trockenrückstandspartikelchen aud der ersten Heizzone kalziniert bzw. teilkalziniert. Auf diese Weise werden Pulverpartikelchen mit einer Teilchengröße von 0,1 bis 2 $\mu$m erhalten, welche in einer Abscheidezone abgekühlt werden und aus der Vorrichtung ausgetragen werden. Durch die besondere Ausbildung der Vorrichtung, insbesondere durch die Wiederlösbarkeit der Vorrichtungsteile kann die Vorrichtung nach dem Baukastenprinzip, evtl. durch Austausch von Vorrichtungsteilen unterschiedlicher Größe, optimal zum Aufbau einer jeweils an die vorherrschende Problemstellung angepaßten Anlage verwendet werden.

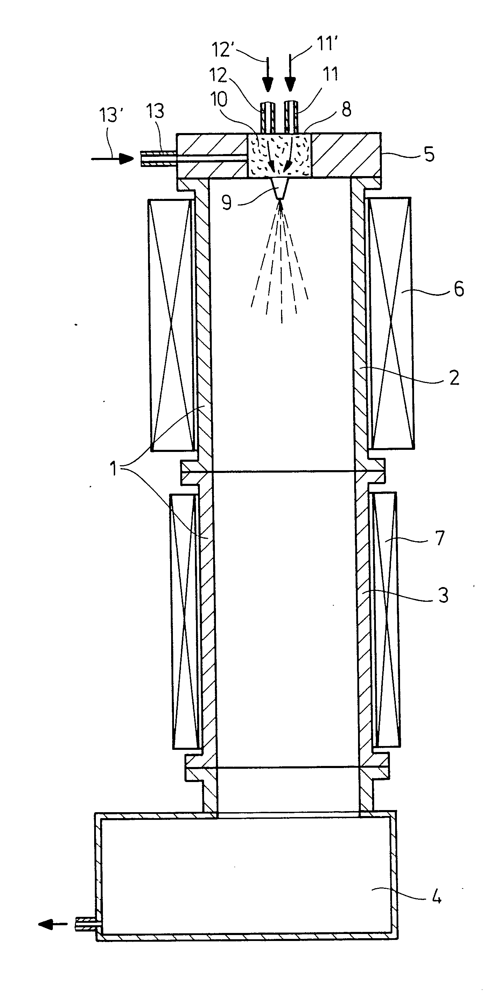

Die Figur zeigt in schematischer Weise eine mögliche Ausführung der erfindungsgemäßen Vorrichtung.

Die Sprüheinrichtung 8 kann eine Sprühdüse 9 enthalten, die entweder eine handelsübliche Zweiphasen-Düse ist, die mit einem Treibgas (Sprühgas) 12' betrieben wird, oder aus einem Ultraschallsprühkopf bestehen. Gasbetriebene Düsen liefern allerdings wesentlich feinere Pulver. Die Sprühdüse 9 kann umgeben sein von einer Sinterstahlfritte (oder einer gleichwertigen Einrichtung aus Faserwerkstoffen resp. Netzen) 10, durch die heißes Trägergas 13' langsam hindurchströmt. Als Trägergas 13' kann, je nach dem gewünschten Produkt-Pulver, Luft oder Inertgas, wie z. B. Stickstoff etc. verwendet werden. Um vor allem bei multinären Oxiden eine Entmischung zu vermeiden, muß dieser Trocknungsschritt möglichst rasch erfolgen. Daher wählt man die Temperatur des Heißgases 13' im Bereich zwischen 500° C und 800° C. Die Temperatur und die Menge des Heißgases 13' sind so zu bemessen, daß die damit eingebrachte Wärmemenge ausreicht, beispielsweise das Sprühgas 12' aufzuheizen und die eingesprühte Flüssigkeit 11' zu verdampfen. Das Gas-Trockenrückstandspartikelgemisch erreicht anschließend die Reaktionszone. In dieser Zone werden die Teilchen durch hohen Energieeintrag so rasch wie möglich aufgeheizt. Dies kann durch einen Strahlungsofen 6 erfolgen, der beispielsweise mit einer hinreichend großen Anzahl von Halogenglühlampen (in der Figur nicht dargestellt) bestückt ist. Die Anwendung von Halogenglühlampen hat wegen der hohen Glühtemperatur den Vorteil einer guten Energieübertragung (Stefan-Boltzmann-Gesetz). In dieser Zone zerfallen die eingesetzten Verbindungen, z. B. wasserlösliche Nitrate, und bilden Oxide. In ähnlicher Weise ist die Verwendung von Azetaten oder anderen Verbindungen möglich, die in organischen Flüssigkeiten gelöst oder suspendiert sind. Zusätzlich ist es möglich, unmittelbar nach dem Sprühkopf 9 eine Mikrowellenheizung oder eine Spule zur Erzeugung eines induktiv gekoppelten Plasmas anzubringen.

In einer nachgeschalteten Kalzinationszone kann noch eine teilweise Kristallisation des Endproduktes erreicht werden. In dieser Zone verwendet man entweder ebenfalls einen Strahlungsofen 7 oder einen normalen Heizofen.

Anschließend wird das Pulver in der Abscheideeinrichtung 4 aus dem Heiß- bzw. Trägergasstrom 13' abgeschieden. Je nach Partikelfeinheit erfolgt die Abscheidung mit einem Zyklon oder einem Elektrofilter (in der Figur nicht dargestellt). Wesentlich ist, daß die Abscheideeinrichtung 4 auf eine niedrigere Temperatur beheizt werden kann, daß das abgeschiedene Pulver nicht mit dem Heißgas 13' und den bei der Reaktion entstandenen gasförmigen Produkten reagieren kann. Je nach Empfindlichkeit des Produktes wird man die Abscheideeinrichtung 4 auf Temperaturen zwischen 150° C und 500° C aufheizen (Heizung in der Figur nicht dargestellt).

Anwendungsbeispiel

Herstellung von Spinell MgAl$_2$O$_4$

Bedingungen:

Ausgangslösung 11': Mg(NO₃)₂, 2Al(NO₃)₃ in Wasser, entsprechend max. 100 g Produkt l

Heißgas 13': Luft 10 m³/h 600° C

Sprühgas 12': Luft 5 m³ 20° C

Durchsatz: etwa 0.8 l/h

Kalzination: Ofenheizung; 1000° C.

Produkt: Teilchengrößen: 0,1 - 2 μm schwach kristallisiert mit ca. 5 % Wassergehalt.

**Ansprüche**

1. Verfahren zur Herstellung von Keramikpulvern, bei welchem

a) eine Lösung oder eine Suspension der Stoffe, aus denen die Bestandteile des Keramikpulvers gebildet werden, hergestellt wird,

b) die Lösung oder die Suspension durch eine Düse in eine beheizbare, in mehrere Heizzonen unterteilte Vorrichtung versprüht wird,

c) wobei mindestens in der ersten Heizzone das Lösungsmittel verdampft wird und Trockenrückstandspartikelchen entstehen und

d) in mindestens einer weiteren Heizzone die Trockenrückstands-Partikelchen auf eine höhere Temperatur als der in Schritt c) angewendeten gebracht und durch Zersetzungs- oder eine andere chemische Reaktion in die Bestandteile des Keramikpulvers überführt werden,

dadurch gekennzeichnet, daß

e) das Versprühen der Lösung oder der Suspension und/oder das Verdampfen des Lösungsmittels mit Hilfe eines zuvor auf eine Temperatur im Bereich von 500° C bis 800° C erhitzten Gases erfolgt,

f) die Partikelchen zur Reaktion und zumindest teilweisen Kalzination auf 900° C bis 1000° C erhitzt werden und

g) in einer Abscheidezone auf eine Temperatur zwischen 150° C und 500° C wieder abgekühlt werden.

2. Vorrichtung zur Durchführung des Verfahrens nach Anspruch 1, bestehend aus einem mit einer unterteilten, äußeren Heizung versehenen, länglichen Behälter mit einem Deckel, in dem eine Sprüheinrichtung zum Versprühen der Lösung oder der Suspension und eine Gaszufuhrleitung angeordnet ist, und einem Boden, in welchem oder in dessen Nähe ein Produkt-Auslaß vorgesehen ist, dadurch gekennzeichnet, daß

a) der Behälter (1) einen oberen Teil (2), in den die Sprüheinrichtung (8) mündet, und einen unteren Teil (3) aufweist,

b) ein Heizungsteil (6) den oberen Behälterteil (2) und ein weiterer Heizungsteil (7) den unteren Behälterteil (3) umgibt,

c) Deckel (5) mit Sprüheinrichtung (8), oberer Behälterteil (2) mit Heizungsteil (6), unterer Behälterteil (3) mit Heizungsteil (7) und der als beheizbare Abscheide-Einrichtung (4) für das Produkt-Pulver ausgebildete Boden des Behälters (1) wieder lösbar miteinander verbunden sind.

3. Vorrichtung nach Anspruch 2, dadurch gekennzeichnet, daß die Sprüheinrichtung (8) aus einer Sprühdüse (9) oder einem Ultraschallsprühkopf mit einem diese (diesen) umschließenden gasdurchlässigen Heißgasverteiler (10) und den entsprechenden Zuführungen (11, 12, 13) für die zu versprühende Lösung oder Suspension (11'), für das Sprühgas (12') und für das zusätzliche Heißgas (13') besteht.

4. Vorrichtung nach Anspruch 2, dadurch gekennzeichnet, daß die Sprüheinrichtung (8) ohne Sprühgaszuführung ausgebildet ist.